# EUROPEAN PATENT APPLICATION

(11) **EP 1 806 529 A2**
(43) Date of publication of application: **11.07.2007**
(21) Application number: 07290002.0
(22) Date of filing: 03.01.2007
(51) Int. Cl.: F16M 11/02

(54) **Mounting system for flat panel electronic display**

(30) Priority: 04.01.2006 US 756181 P
(71) Applicant: CSAV, Inc., Savage, MN 55378 (US)
(72) Inventor: Wohlford, Jim, Savage, Minnesota 55378 (US); Grey, Dominic, Savage, Minnesota 55378 (US); Pfister, Joel, Savage, Minnesota 55378 (US); Stanek, Nick, Savage, Minnesota 55378 (US)
(74) Representative: Gendron, Vincent Christian

(57) **Abstract**

A flat panel electronic display mount includes a display mount assembly having a discontinuous bearing (42), the bearing being expandable radially responsive to an increased frictional biasing force, the biasing force being applied axially to the discontinuous bearing (42), the radial expandability assisting in maintaining a desired amount of frictional engagement afforded by the discontinuous bearing (42). A flat panel electronic display mount further includes a display mount assembly (20) having a bearing, the bearing having a central axis (53), a biasing means being selectively engagable with the bearing. Additionally, in a flat panel electronic display mount, a method of maintaining a desired amount of frictional engagement.

## Description

### Related Application

The present application claims benefit of U.S. Provisional Patent Application No. 60/756,181, filed January 4, 2006, which is incorporated herein in its entirety by reference.

### Field of the Invention

The present invention is directed to mounts for electronic displays and more specifically to devices for mounting flat panel electronic displays such as plasma and LCD screens on a fixed structure.

### Background of the Invention

Flat panel displays have become an increasingly popular substitute for projection devices and CRTs. The flat panel display is typically mounted on a structure, such as a wall. Flat panel displays, especially LCD's, are typically most clearly viewable from a position directly in front of the display. The display image is often too dark or not visible at all if viewed from a significant angle.

It is thus preferable that the angle of a flat panel display can be adjusted for optimum viewing. Various prior art positioning devices have been used, such as friction based hinges, mechanical linkages with springs or other biasing devices, and various mechanical latches. Traditional friction based devices and mechanical latches typically require that the flat panel display be held at the correct angle while the device is adjusted to maintain the position on its own. This may require the operator to lift and hold a substantial portion of the weight of the flat panel display. In some instances, the operator must also overcome the resistance of the positioning device.

Also, the hinge and pivot joints used in some prior devices typically enable positioning of the display about only one axis per joint. The degree of display position adjustability of such devices is limited by the number of joints that can be economically and practically provided.

Mechanical linkages with springs are expensive to build. For example, U.S. Patent No. 6,419,196 (Sweere et al.) discloses a multi-jointed, pivoted support arm to support and position a flat panel display that uses a nitrogen gas spring counterbalance mechanism.

In some prior mounting devices, described in U.S. Patent Application Nos.10/449,834 and 11/147,987, each of which is hereby fully incorporated herein by reference, the mount is geometrically configured so that the center of pivoting motion of the display is positioned proximate the center of gravity of the display. This configuration enables the display and mount to be essentially self-balancing so that minimal operator effort is needed to position the display. Even in these devices, however, it may be advantageous to provide the ability to selectively adjust the amount of friction in the mount so as to enable the mount to resist accidental repositioning of the display through contact or to "lock" the display in a desired position. A drawback of previous friction adjustment mechanisms, however, is that they tend to require significant effort to adjust. Another drawback is that the friction adjustment tends to loosen over time due to the weight of the display.

What is still needed in the industry is a low-cost self-balancing mount for a flat panel electronic display that enables stable friction adjustment in the mount with relatively little physical effort.

### Brief Summary of the Invention

In an embodiment, the present invention includes a mounting system for a flat panel display that substantially meets the aforementioned needs of the industry. According to an embodiment of the invention, a display interface having a hollow, frusto-spherical cup portion is attached to the rear surface of a flat panel electronic display. The frusto-spherical cup is clamped between a split outer bearing that engages the outer surface of the cup and an inner bearing disc that engages the inner surface of the cup. A friction adjustment screw is provided in a body portion which carries the outer bearing portion, and to which the inner bearing disc is also secured. Tightening of the friction adjustment screw causes the outer bearing portion to be forced outward from the body portion against the frusto-spherical cup, clamping it more tightly against the inner bearing disc and thereby providing increased frictional resistance to sliding movement of the frusto-conical cup and display attached thereto relative to the guide structure. A knob may be coupled with the friction adjustment screw to enable easy fingertip adjustment of friction. Loosening of the screw likewise causes reduced frictional resistance so that the display can be adjusted as desired for best viewing. The frusto-spherical cup may be formed with a radius of curvature having a center disposed proximate the center of gravity of the flat panel display so as to enable positioning of the flat panel display with minimal effort.

In an embodiment, the present invention includes a flat panel electronic display mount including a display mount assembly having a discontinuous bearing, the bearing being expandable radially responsive to an increased frictional biasing force, the biasing force being applied axially to the discontinuous bearing, the radial expandability assisting in maintaining a desired amount of frictional engagement afforded by the discontinuous bearing. A flat panel electronic display mount according to an embodiment of the present invention may further include a display mount assembly having a bearing, the bearing having a central axis, a biasing means being selectively engagable with the bearing. Additionally, in a flat panel electronic display mount, an embodiment of the present invention is a method of maintaining a desired amount of frictional engagement.

### Brief Description of the Drawings

Fig. 1 is a rear perspective view of a flat panel electronic display and mounting system according to an embodiment of the present invention;
Fig. 2 is a top plan view of a mounting system according to an embodiment of the invention;
Fig. 3 is a bottom plan view of the embodiment depicted in Fig. 2;
Fig. 4 is a side elevation view of the embodiment depicted in Fig. 2;
Fig. 5 is a rear elevation view of the embodiment depicted in Fig. 2;
Fig. 6 is a front elevation view of the embodiment depicted in Fig. 2;
Fig. 7 is a rear perspective view of a mounting system according to an embodiment of the present invention;
Fig. 8 is a top plan view of the embodiment depicted in Fig. 7;
Fig. 9 is a bottom plan view of the embodiment depicted in Fig. 7;
Fig. 10 is a side elevation view of the embodiment depicted in Fig. 7;
Fig. 11 is a cross sectional view taken through section 11-11 of Fig. 8;
Fig. 12 is a cross sectional view taken through section 12-12 of Fig. 14A;
Fig. 13 is a fragmentary side elevation view of the guide structure and display interface portion of a mount according to an embodiment of the invention;
Fig. 14A is a fragmentary top plan view of the guide structure and display interface portion of a mount according to another embodiment of the invention;
Fig. 14B is a fragmentary side elevation view of the guide structure and display interface portion depicted in Fig. 14A;
Fig. 15 is an exploded view of the display interface and guide structure portions of a mount according to an embodiment of the invention;
Fig. 16 a side elevation view of a mounting system according to another embodiment of the present invention;
Fig. 17 is a top plan view of the embodiment depicted in Fig. 16;
Fig. 18 is a bottom plan view of the embodiment depicted in Fig. 16;
Fig. 19 is a rear elevation view of an alternative embodiment of a mounting system according to an embodiment of the invention;
Fig. 20 is a side elevation view of the embodiment of Fig. 19;
Fig. 21 is a top plan view of the embodiment of Fig. 19; and
Fig. 22 is a cross sectional view taken through section 22-22 of Fig. 21.

### Detailed Description of the Invention

A mounting device according to an embodiment of the present invention is depicted generally at 20 in the figures and generally includes a mounting device assembly 21 having a display interface 22, guide structure 24, and support structure 26.

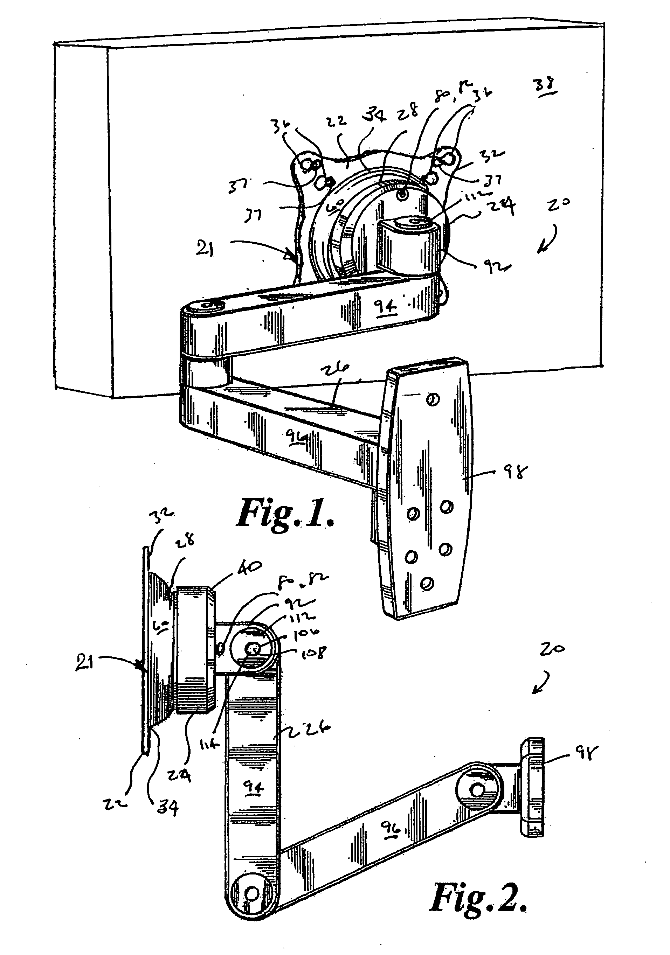

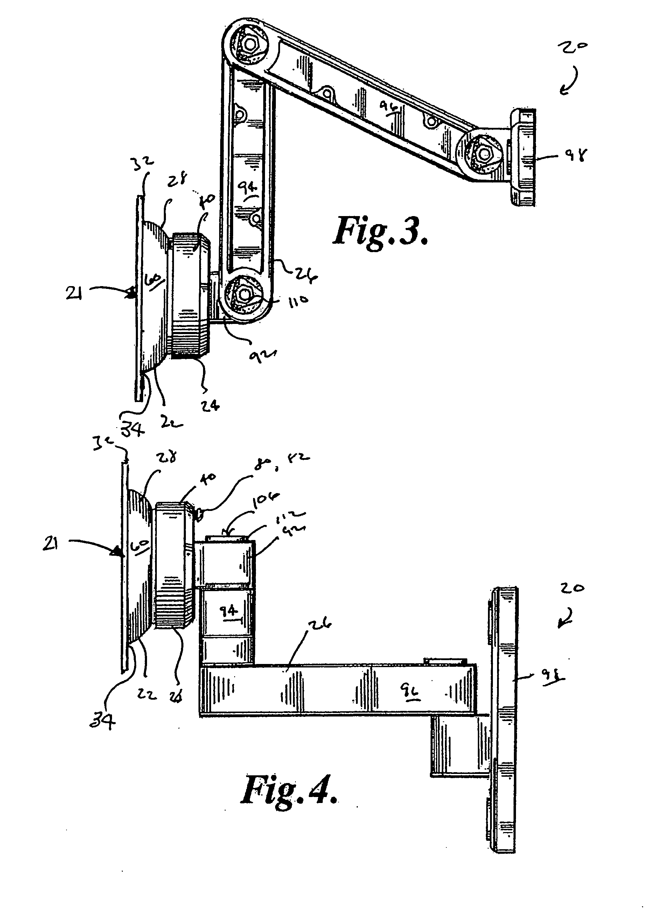

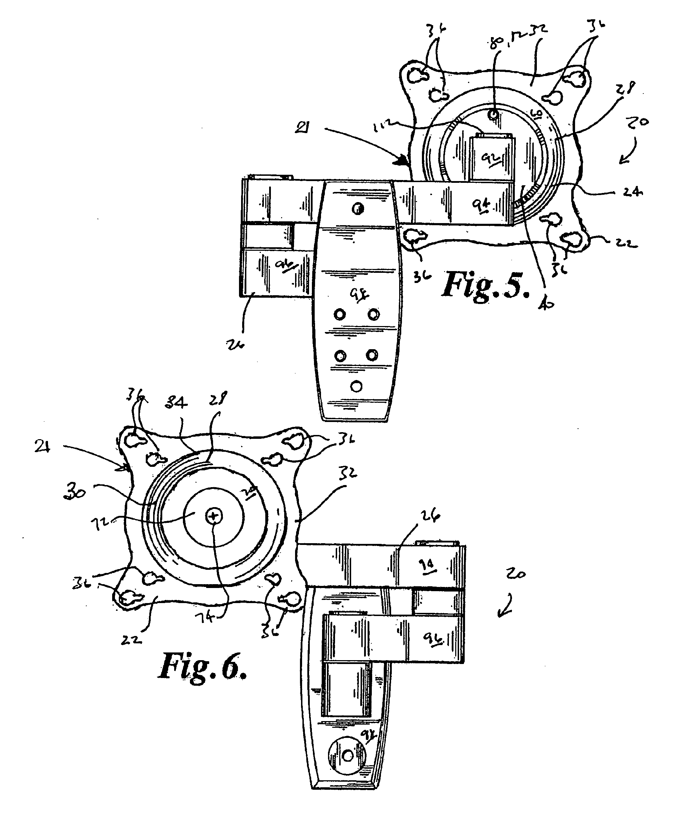

Referring to figures 1-10, the display interface 22 of the mounting device 20 generally includes a frusto-spherical cup 28 which defines opening 30. Flange portion 32 extends laterally outward from outer edge 34 of frusto-spherical cup 28, and includes apertures 36 defined therein for receiving fasteners 37 (see particularly fig. 1) to secure display interface 22 to an electronic display device 38. The cup wall 33 of frusto-spherical cup 28 terminates at rear wall 35. Rear wall 35 has central bore 39 defined therein.

The guide structure 24 of the mounting device 20 generally includes body portion 40, outer bearing 42, and inner bearing assembly 44. Body portion 40 is generally cup shaped and may be integrally formed from any suitable material such as metal or polymer, and generally includes outer circular wall 46 and inner circular wall 48 transversely coupled to rear wall 54. The outer circular wall 46 and inner circular wall 48 cooperatively define circular recess 50 therebetween. Central boss 52 is generally cylindrically shaped and extends forwardly from rear wall 54. An internally threaded bore 56 is defined coincident with the central axis 53 of the central boss 52.

The outer bearing 42 of the guide structure 24 is generally ring shaped and is received in recess 50 of body portion 40. The axis of the outer bearing 42 is preferably in a coaxial disposition with a longitudinal axis 53 of the central boss 24 when the outer bearing 42 is integrated into the mounting device 20. The outer bearing 42 has a bearing surface 58 which may be conformingly shaped, such as by beveling, with outer surface 60 of cup wall 33 of the frusto-spherical cup 28. The outer bearing 42 has an opposed inner bearing surface 86 that bears against the rear wall 54. The inner bearing surface 86 may be conformingly shaped with an adjacent surface of the rear wall 54. Outer bearing 42 is generally annular, but may be discontinuous with a gap 62 defined between spaced apart ends 64, 66 (see particularly fig. 15).

Set screw 68 extends through rear wall 54 of guide structure 24 and is received in gap 62 to inhibit rotation of outer bearing 42 in recess 50. An advantage of the discontinuous outer bearing 42 is that the gap 62 allows the outer bearing 42 to expand radially, thereby assisting in the seating of the outer bearing 42. Further, the discontinuous outer bearing 42 expands radially as the frictional biasing forces applied axially along axis 53 to the discontinuous outer bearing 42 are increased, thereby assisting in maintaining the desired amount of frictional biasing internal to the mounting device 20.

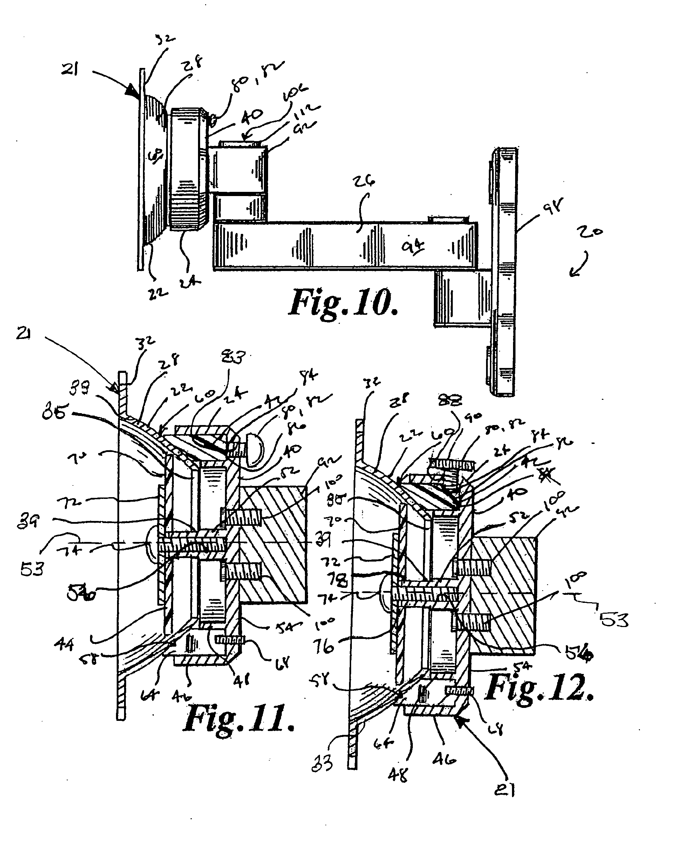

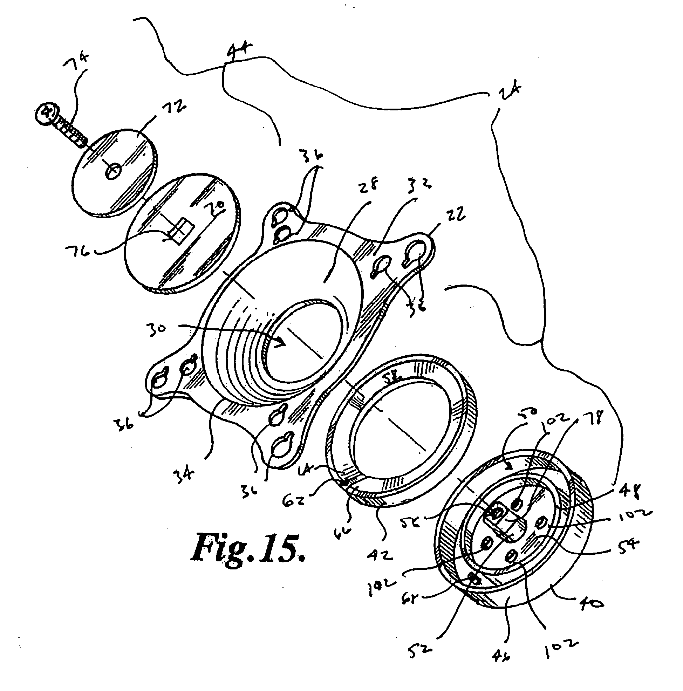

Inner bearing assembly 44 generally includes inner bearing disc 70, washer 72 and threaded fastener 74 (see particularly figs. 11 and 12). Inner bearing disc 70 defines square aperture 76, which is received on flats 78 of central boss 52. The central boss 52 extends through the bore 39 defined in the rear wall 35 of the cup 28. Threaded fastener 74 extends through washer 72 and square aperture 76 and threads into bore 56 to secure inner bearing assembly 44 to body portion 40 with frusto-spherical cup 28 clamped between inner bearing disc 70 and outer bearing 42.

According to embodiments of the invention, friction adjustment control 80 enables selective frictional adjustment of the mounting device 20. In an embodiment depicted in the cross-sectional view of Fig. 11, friction adjustment control 80 generally includes biasing screw 82, which is threadedly received in a threaded aperture 83 defined in rear wall 54 of guide structure 24.

In operation, when screw 82 is tightened, distal end 84 of the screw 82 bears on inner bearing surface 86 of outer bearing 42, forcing the outer bearing 42 forwardly against outer surface 60 of frusto-spherical cup 28 and in turn forcing inner surface 86 of the cup wall 33 of the frusto-spherical cup 28 more tightly against inner bearing disc 70. Frusto-spherical cup 28 is thereby more tightly clamped between inner bearing disc 70 and outer bearing 72, increasing frictional resistance to movement of frusto-spherical cup 28 relative to body portion 40. Of course, it will be appreciated that loosening of biasing screw 82 will likewise result in less biasing clamping force applied to frusto-spherical cup 28 and a resultant lessening of frictional resistance to movement of frusto-spherical cup 28 relative to body portion 40.

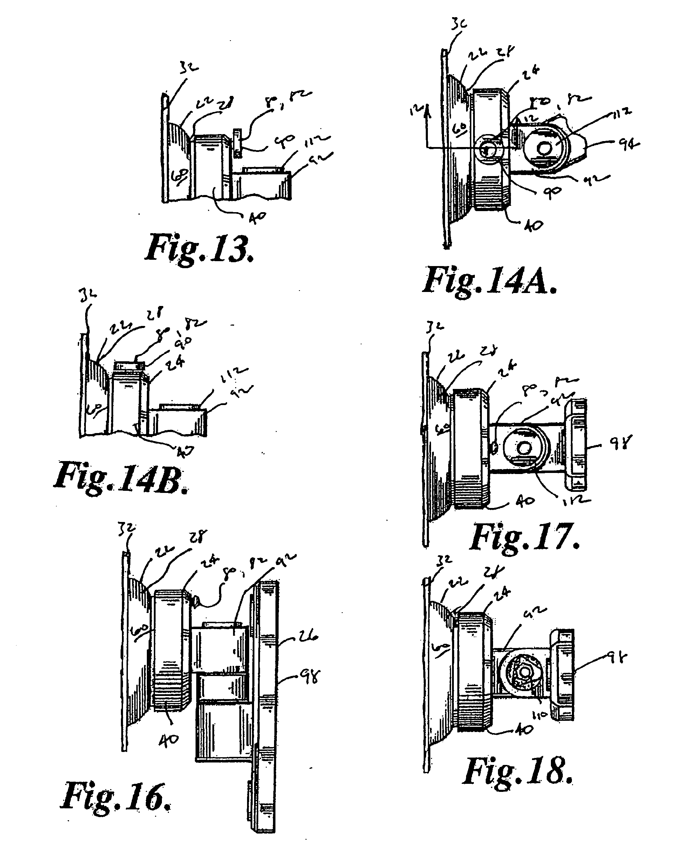

In an alternative embodiment of the invention depicted in Fig. 12, screw 82 extends through threaded bore 88 defined in outer wall 46 of body portion 40. Beveled surface 86 is provided on the outer bearing 42. Distal end 84 of screw 82 may be tapered conformingly with beveled surface 86. In operation, when screw 82 is tightened, tapered distal end 84 of screw 82 slides downward along beveled surface 86 and forces outer bearing 42 forward against outer surface 60 of frusto-spherical cup 28. Again, frusto-spherical cup 28 is thereby more tightly clamped between inner bearing disc 70 and outer bearing 72, increasing the frictional resistance to movement of frusto-spherical cup 28 relative to body portion 40. As before, loosening of screw 82 will enable outer bearing 42 to recede rearward into recess 50, resulting in less biasing clamping force applied to frusto-spherical cup 28 and a resultant lessening of frictional resistance to movement of frusto-spherical cup 28 relative to body portion 40. In some embodiments, as depicted in Figs. 13, 14A and 14B, knob 90 may be coupled with screw 82 to enable fingertip adjustment of friction.

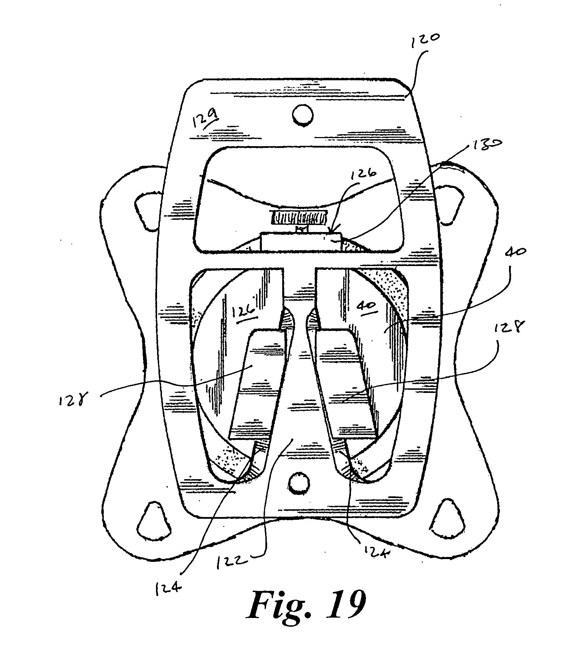

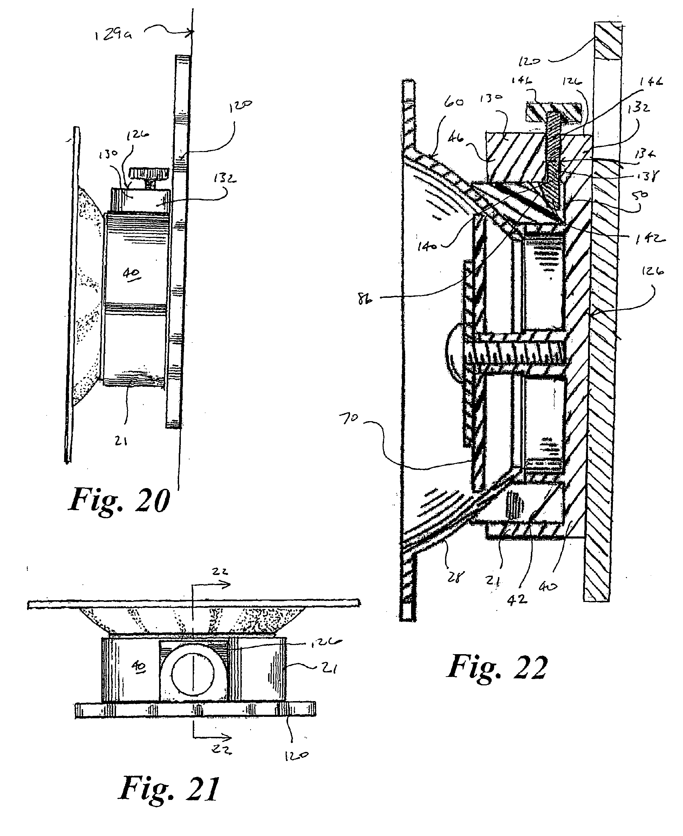

In another alternative embodiment of the invention depicted in Figs. 19-22, mounting device 20 generally includes wall interface plate 120 which receives mounting device assembly 21 thereon. Wall interface plate 120 defines wedge shaped central column 122 having opposing rearward facing beveled surfaces 124. Rear face 126 of body portion 40 has a pair of spaced apart fastening structures 128, each having a forward facing beveled surface (not depicted) confronting the rearward facing beveled surfaces 124 of the wall interface plate 120.

In the depicted embodiment, wall interface plate 120 may be mounted with rear face 129 confronting a wall surface 129a. In operation, mounting device assembly 21 may be detached from wall interface plate 120 by moving mounting device assembly 21 vertically relative to wall interface plate 120 and pulling outwardly until fastening structures 128 are disengaged from central column 122. Attachment of mounting device assembly 21 to wall interface plate 120 is accomplished by the reverse of this procedure.

Also in the embodiment of Figs. 19-22, outer wall 46 of mounting device assembly 21 includes raised boss 130 at top side 132 of body 40. Boss 130 defines aperture 134 extending through from top surface 126 into recess 50. Upper shaft 138 of wedge element 140 is slidably received and guided in aperture 134 while lower wedge shaped portion 142 bears on beveled surface 86 of outer bearing 42. Screw 144 is threaded into aperture 134 and bears on upper shaft 138. Knob 146 is fixed to screw 144 to enable a user to thread screw 144 in and out with only finger pressure. In operation, when screw 144 is tightened, wedge element 140 is forced downward, with lower wedge shaped portion 142 sliding downward along beveled surface 86, thereby forcing outer bearing 42 outward against outer surface 60 of frusto-spherical cup 28. Again, frusto-spherical cup 28 is thereby more tightly clamped between inner bearing disc 70 and outer bearing 42, increasing the frictional resistance to movement of frusto-spherical cup 28 relative to body portion 40. As before, loosening of screw 144 will enable outer bearing 42 to recede rearward into recess 50, resulting in less biasing clamping force applied to frusto-spherical cup 28 and a resultant lessening of frictional resistance to movement of frusto-spherical cup 28 relative to body portion 40.

The friction adjustment mechanism according to an embodiment of the present invention offers significant advantages over prior friction adjustment mechanisms. The weight of an electronic display attached to display interface 22 is borne primarily through fastener 74 to body portion 40 and does not tend to pull inner bearing disc 70 and outer bearing 42 apart. As a result, the weight of the electronic display does not tend to reduce the frictional clamping force on frusto-spherical cup 28 as in prior devices. In addition, since the friction adjustment mechanism is not working to partially support the weight of the display device, the friction adjustment requires much less force for a comparable friction effect. This may enable application of sufficient force to virtually "lock" the display in position with only finger tightness of screw 82, 144. Further, the split outer bearing 42 enables relatively smoother sliding movement of frusto-spherical cup 28 between inner bearing disc 70 and outer bearing 42.

In embodiments of the invention, frusto-spherical cup 28 may be provided with a radius of curvature having a center generally coincident with the center of gravity of the display as described in U.S. Patent Application Nos.10/449,834 and 11/147,987, previously incorporated herein by reference. This enables the electronic display to be substantially self-balancing, thereby requiring only minimal effort for positioning the display.

Support structure 26 may be virtually any structure enabling attachment of guide structure 24 to a fixed structure such as a wall or column of a building. In the embodiment depicted in Figs. 1-6, support structure 26 generally includes pivot block 92, first arm 94, second arm 96, and wall plate 98. Pivot block 92 is attached to rear wall 54 of guide structure 24 with fasteners 100, which extend through apertures 102 in rear wall 54, and that are received in threaded bores 104 in pivot block 92. Vertical bore 106 is defined in pivot block 92 for receiving bolt 108. First arm 94 has a corresponding vertical bore (not depicted) which receives bolt 108 and enables horizontal pivoting of pivot block 92 and guide structure 24 relative to first arm 94. Nut 110 threads onto bolt 108 to secure pivot block 92 and first arm 94 together. Escutcheon 112 fits over bore 106 to provide a finished appearance to the upper surface of the device. Aperture 114 is provided in escutcheon 112 to enable bolt 108 to be accessed with a tool for tightening without requiring removal of escutcheon 112.

First arm 94 is pivotally attached to second arm 96, and second arm 96 is pivotally attached to wall plate 98 using a similar arrangement to that described above. Spacer 116 may be provided between first arm 94 and second arm 96 to enable free movement of the arms without binding.

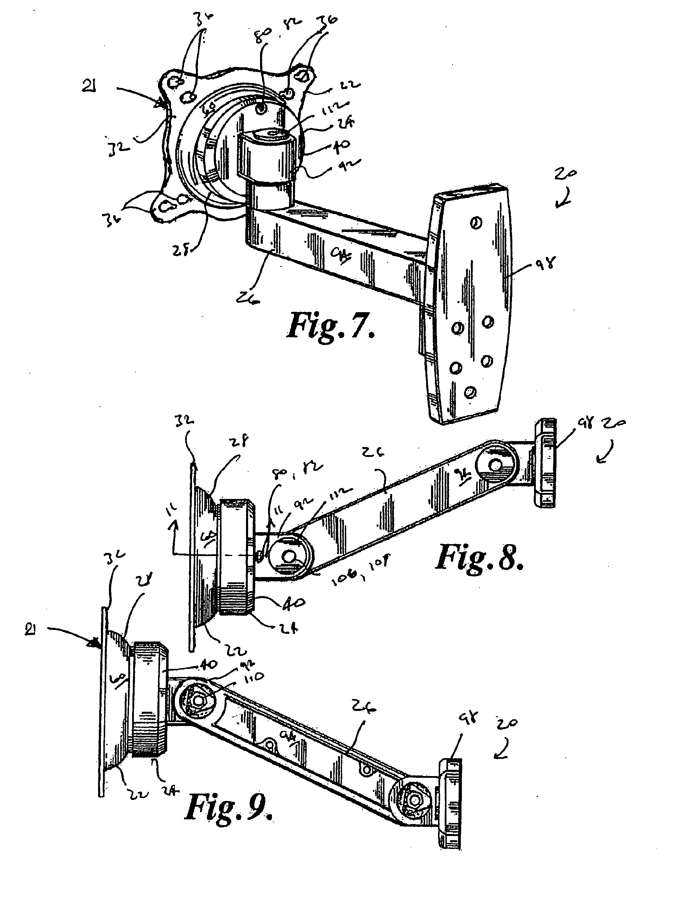

In other embodiments of the invention, guide structure 24 may be coupled with wall plate 98 using only one swing arm as depicted in Figs. 7-10, or directly pivotally attached to wall plate 98 as depicted in Figs. 16-18. Again, however, it will be appreciated that virtually any other support structure may be used to couple guide structure 24 to a fixed structure. Such alternative support structures may include, for example, any combination of swinging, folding, or articulating arms enabling positioning of guide structure 24 horizontally or vertically relative to the fixed structure.

## Claims

1. A flat panel electronic display mount, comprising:
a display mount assembly having a discontinuous bearing, the bearing being expandable radially responsive to an increased frictional biasing force, the biasing force being applied axially to the discontinuous bearing, the radial expandability assisting in maintaining a desired amount of frictional engagement afforded by the discontinuous bearing.

2. The flat panel electronic display of claim 1, the discontinuous bearing having an annular shape.

3. The flat panel electronic display of claim 2, the discontinuous bearing having a gap defined in the annulus.

4. The flat panel electronic display of claim 3, the display mount assembly having a set screw disposable in the gap defined in the annulus.

5. The flat panel electronic display of claim 4, the set screw for preventing rotation of the discontinuous bearing.

6. The flat panel electronic display of claim 1, the discontinuous bearing having a bearing surface, the bearing surface being conformingly shaped with a cup wall of a cup of the display mount assembly.

7. The flat panel electronic display of claim 1, the discontinuous bearing having an inner bearing surface, the inner bearing surface being conformingly shaped with an adjacent surface of the rear wall of a body portion of the display mount assembly.

8. The flat panel electronic display of claim 1, the discontinuous bearing having a beveled surface intersecting an inner bearing surface.

9. The flat panel electronic display of claim 8, having a biasing means selectively engagable with the beveled surface of the discontinuous bearing.

10. The flat panel electronic display of claim 7, having a biasing means selectively engagable with the inner bearing surface of the discontinuous bearing.

11. A self-balancing adjustable flat panel electronic display system adapted for mounting on a non-horizontal fixed structure, the system comprising:
a support structure adapted to attach to the fixed structure;
a flat panel electronic display device;
a device interface portion for receiving the flat panel electronic display device thereon, the device interface portion including a frusto-spherical portion having an outer surface;
a guide structure operably coupling the device interface portion and the support structure, the guide structure including body portion and a bearing structure received in the body portion, the bearing structure engaging and guiding the outer surface of the frusto-spherical portion; and
means for selectively biasing the bearing structure against the outer surface of the frusto-spherical portion.

12. The flat panel electronic display system of claim 11, the means for selectively biasing the bearing structure against the outer surface of the frusto-spherical portion being selectively engagable with the bearing structure on an axis, the axis being substantially parallel to the bearing structure central axis.

13. The flat panel electronic display system of claim 12, the means for selectively biasing the bearing structure against the outer surface of the frusto-spherical portion including a screw.

14. The flat panel electronic display system of claim 11, the means for selectively biasing the bearing structure against the outer surface of the frusto-spherical portion being selectively engagable with the bearing structure on an axis, the axis being substantially transverse to the bearing structure central axis.

15. The flat panel electronic display system of claim 14, the means for selectively biasing the bearing structure against the outer surface of the frusto-spherical portion including a screw.

16. A flat panel electronic display mount, comprising:
a display mount assembly having a discontinuous bearing, the bearing having a central axis, a biasing means being selectively engagable with the bearing.

17. The flat panel electronic display mount of claim 16, the biasing means being selectively engagable with the bearing on an axis, the axis being substantially parallel to the bearing central axis.

18. The flat panel electronic display mount of claim 16, the biasing means being selectively engagable with the bearing on an axis, the axis being substantially transverse top the bearing central axis.

19. In a flat panel electronic display mount, a method of maintaining a desired amount of frictional engagement, comprising:
forming a discontinuous bearing, radially expanding the bearing responsive to application of a frictional biasing force applied axially to the discontinuous bearing.

20. The method of claim 19 including selectively engaging biasing means with the discontinuous bearing on an axis, the axis being selectively either substantially parallel to a discontinuous bearing central axis or substantially transverse to the discontinuous bearing central axis.
